Europäisches Patentamt

European Patent Office

Office européen des brevets

(11) Veröffentlichungsnummer: **0 486 957 A1**

(12) **EUROPÄISCHE PATENTANMELDUNG**

(21) Anmeldenummer: **91119500.6**

(22) Anmeldetag: **15.11.91**

(51) Int. Cl.5: **B29C 67/22**

(30) Priorität: **20.11.90 DE 4036991**

(43) Veröffentlichungstag der Anmeldung:
**27.05.92 Patentblatt 92/22**

(84) Benannte Vertragsstaaten:
**AT BE CH DE ES FR GB IT LI NL**

(71) Anmelder: **Linde Aktiengesellschaft**
**Abraham-Lincoln-Strasse 21**
**W-6200 Wiesbaden(DE)**

(72) Erfinder: **Klane, Bernd, Dipl.-Ing.**
**Konrad-Peutinger-Strasse 4**
**W-8000 München 70(DE)**

(74) Vertreter: **Schaefer, Gerhard, Dr.**
**Linde Aktiengesellschaft Zentrale**
**Patentabteilung**
**W-8023 Höllriegelskreuth(DE)**

(54) Verfahren zur Verwendung inerter Treibmittel bei der Herstellung aufgeschäumter Kunststoffe.

(57) Das Verfahren betrifft die Herstellung aufge-schäumter Kunststoffe, bei der dem geschmolzenen, erweichten oder flüssigen Kunststoff regelbar ein Treibmittel mit hohem Druck zugeführt wird, wobei inerte Treibmittel wie Kohlendioxid, Stickstoff oder Argon verwendet werden. Durch das Verfahren wird erreicht, daß ungiftige, nicht brennbare und umwelt-vertragliche Inertgase als Treibmittel in einem exakt regelbaren Massefluß der Kunststoffmasse zugeleitet werden können.

Die Erfindung betrifft ein Verfahren zur Herstellung aufgeschäumter Kunststoffe, bei dem dem geschmolzenen, erweichten oder flüssigen Kunststoff regelbar ein Treibmittel mit hohem Druck zugeführt wird, wobei inerte Treibmittel, wie Kohlendioxid, Stickstoff oder Argon, verwendet werden.

Bekannte Verfahren zur Herstellung aufgeschäumter Kunststoffe verwenden unter Normalbedingungen gasförmige Treibmittel, die mit hohem Druck einer plastischen, meist thermisch erweichten Kunststoffmasse zugeführt und mit dieser homogen vermischt werden. Bei der anschließenden Entspannung dieses Gemisches auf Normaldruck tritt eine durch das Treibmittel hervorgerufene Aufschäumung des Kunststoffs ein.

In der industriellen Produktion solcher Kunststoffe werden die Treibmittel fast ausschließlich unter hohem Druck in flüssigem Zustand der Kunststoffmasse zugeführt. Da Flüssigkeiten sehr genau dosiert werden können, lassen sich die gewünschten Verhältnisse der Mengen an Kunststoff und Treibmittel sehr genau regeln. Dies ist insbesondere bei der Herstellung solcher Kunststoffprodukte in Extruderanlagen von großem Vorteil. Der geschmolzene Kunststoff wird in dem Extruder mittels Schneckengewinden zu einer Austrittsdüse gefördert. An einer bestimmten Stelle des Extruders wird nun das verflüssigte Treibmittel zugegeben, das sich mit dem Kunststoff auf dem Weg zur Austrittsdüse vermischt. Um die Produktionsqualität bei diesem Verfahren unverändert aufrechtzuerhalten, müssen die Massenströme von Treibmittel und Kunststoff jeweils konstant bleiben. Anderenfalls wird der aus der Düse extrudierte Kunststoff unterschiedlich stark aufgeschäumt. Produktionsfehler und Ausschuß sind die Folgen, die den Herstellungsprozeß unrentabel machen.

Als verflüssigte Treibmittel werden halogenierte Kohlenwasserstoffe, wie Fluorchlor-Kohlenwasserstoffe (FCKW), und in steigendem Maße auch gesättigte Kohlenwasserstoffe, wie Propan, Butan oder Pentan, verwendet. Halogenierte Kohlenwasserstoffe haben als Treibmittel in der Kunststoffherstellung mehrere Vorteile. Sie sind ungiftig, nicht brennbar, besitzen eine hohe Löslichkeit mit den Kunststoffen und eine geringe Wärmeleitfähigkeit. Die hohe Löslichkeit erlaubt beispielsweise die Herstellung aufgeschäumter Kunststoffe mit geringem Raumgewicht (Dichte).

Beim Herstellungsprozeß sowie in der Folgezeit aufgrund von Diffusionsprozessen tritt das gasförmige Treibmittel aus dem geschäumten Kunststoff in die Umwelt. Halogenierte Kohlenwasserstoffe sind nach heutigen Erkenntnissen in hohem Maße umweltschädlich, da sie die Ozonschicht der Atmosphäre zerstören und zudem noch den Treibhauseffekt stark fördern.

Gesättigte Kohlenwasserstoffe, wie Propan, Butan oder Pentan, die die halogenierten Kohlenwasserstoffe als Treibmittel ersetzen sollen, zeigen die Nachteile, in bestimmter Konzentration giftig, entzündlich oder gar explosiv zu sein. Diese Eigenschaften erfordern bei der Kunststoffproduktion Sicherheitsvorkehrungen und aufwendige Meßkontrollen der Treibmittelkonzentrationen am Arbeitsplatz.

Es ist deshalb erstrebenswert, Treibmittel zu verwenden, die nicht umweltschädlich und außerdem ungiftig, nicht brennbar, und chemisch reaktionsträge sind.

Inertgase, wie Kohlendioxid, Stickstoff oder Argon, erfüllen diese Anforderungen.

Wie bereits erwähnt, setzt der industrielle Einsatz von Inertgasen als Teibmittel voraus, daß diese in genau dosierten Mengen einmalig oder kontinuierlich einer plastischen Kunststoffmasse zugeführt werden können. Diese Anforderung kann bisher technisch nicht befriedigend erfüllt werden. Insbesondere bei Extruderanlagen besteht das Problem, daß zwar ein konstanter Massestrom an Kunststoff im Extruder gefördert wird, wegen der unterschiedlich starken thermischen Aufweichung des Kunststoffs aber Dichte- und Druckschwankungen im Extruder auftreten. Das Treibmittel muß gegen diese Druckschwankungen in den Extruder eingeleitet werden.

Ein Inertgas, wie Stickstoff, kann bei den herrschenden Produktionstemperaturen, die in etwa der Raumtemperatur entsprechen, dem Kunststoff nicht in flüssiger Form zugeführt werden, da seine kritische Temperatur bei etwa -147 °C liegt. Oberhalb der kritischen Temperatur lassen sich Gase nicht mehr verflüssigen. Die Verwendung tiefkalten, flüssigen und somit exakt dosierbaren Stickstoffs ist selbstverständlich ungeeignet, da dieser die Plastizität des Kunststoffs beseitigen würde. Somit stellt sich bei der Verwendung von Stickstoff als inertes Treibmittel das Problem, diesen in nicht flüssiger Form gegen den schwankenden Druck im Extruder der Kunststoffmasse in genauen Mengen zuführen zu müssen.

Druckventilregler können dieses Problem nicht beseitigen, da sie nur einen Treibmittelfluß bei konstantem Druck, nicht aber einen konstanten Massestrom ermöglichen. Aufgrund der hohen Kompressibilität des nicht flüssigen Treibmittels führt der Gegendruck im Extruder zu Schwankungen im Massestrom des zugeführten Treibmittels. Ein industrielle Produktion von mit Inertgasen aufgeschäumten Kunststoffen in Extruderanlagen scheiterte bisher.

Der Erfindung liegt daher die Aufgabe zugrunde, ein Verfahren zur industriegerechten Herstellung aufgeschäumter Kunststoffe zu entwickeln, die umweltfreundliche, inerte Treibmittel, wie Kohlendioxid, Stickstoff oder Argon, enthalten.

Diese Aufgabe wird erfindungsgemäß dadurch gelöst, daß die zugeführte Menge des Treibmittels mit einem Massendurchflußregler (Mass-Flow-Controller) gemessen und geregelt wird.

Auf dem Markt erhältliche Massendurchflußregler sind speziell für Gase entwickelt und laut Herstellerangaben ausschließlich für Substanzen im gasförmigen Zustand geeignet. Das Meßprinzip beruht auf thermodynamischen Prinzipien, nach denen die von einem Gas aufgenommene Wärmemenge je nach Wärmekapazität und Masse des Gases zu einer bestimmten Temperaturerhöhung führt. Ein Teil der durch ein Rohr fließenden Gasmasse wird im Massendurchflußregler durch einen kapillarförmigen Bypass geführt und die Temperaturerhöhung bei zugeführter Wärmemenge exakt gemessen. Daraus ergibt sich dann die exakte Meßmöglichkeit der pro Zeiteinheit durch das Rohr fließenden Gasmasse. Laut Hersteller ist darauf zu achten, daß das Gas bei dieser Meßmethode nicht in den flüssigen Zustand übergeht. Sich bildende Flüssigkeitströpfchen würden sonst den Gasfluß durch die Kapillare behindern oder unmöglich machen.

Beim erfindungsgemäßen Verfahren werden die inerten Treibmittel typischerweise bei Temperaturen oberhalb 10 °C und mit hohen Drücken oberhalb 200 bar zugeführt. Gase, wie Argon oder Stickstoff, deren kritische Temperaturen unterhalb -100 °C liegen, befinden sich unter diesen Bedingungen in ihrem überkritischen zustandsbereich, in dem keine klar definierte Grenze zwischen der Flüssigphase und der Gasphase existiert. Kohlendioxid mit einer kritischen Temperatur von etwa 31 °C liegt unter diesen Bedingungen unterhalb dieser Temperatur im flüssigen, oberhalb im überkritischen Zustand vor.

In völlig unerwarteter Weise lassen sich beim erfindungsgemäßen Verfahren die Mengen der inerten Treibmittel, die sich in den oben beschriebenen physikalischen Zuständen befinden, mit dem Massendurchflußregler exakt messen und regeln, obwohl eine exakte Dosierung dieser inerten Treibmittel, insbesondere des Kohlendioxids, unter den genannten Bedingungen mit dem Massendurchflußregler nicht zu erwarten war.

Damit ergibt sich aus dem erfindungsgemäßen Verfahren die Möglichkeit, inerte Gase, wie Stickstoff, Kohlendioxid oder Argon, als Treibmittel unter hohem Druck der plastischen Kunststoffmasse zuzuführen, wobei die pro Zeiteinheit zugeführt Masse an Treibmittel mit hoher Genauigkeit gemessen und/oder geregelt werden kann.

Insbesondere bei Extruderanlagen wird durch das erfindungsgemäße Verfahren sichergestellt, daß das Verhältnis der Massen im Gemisch von Kunststoff und Treibmittel zeitlich konstant bleibt. Nach dem Extrudieren findet somit die Aufschäumung örtlich und zeitlich in homogener Weise statt.

Der Produktionsvorgang wird durch das erfindungsgemäße Verfahren erstmals industriegerecht einsetzbar.

Das erfindungsgemäße Verfahren bietet eine sinnvolle Weiterverwendung des bei industriellen Produktionsverfahren anfallenden Kohlendioxids, das in gereinigter Form jetzt auch für die Herstellung aufgeschäumter Kunststoffe verwendet werden kann.

Die Verwendung eigens hergestellter, meist umweltbelastender, gefährlicher oder gesundheitsschädlicher Treibmittel entfällt bei Anwendung des erfindungsgemäßen Verfahrens.

Es muß erwähnt werden, daß die auf dem Markt erhältlichen Massendurchflußregler Werkstoffe, wie Viton, enthalten, in denen sich Kohlendioxid unter hohem Druck gut löst, und die dadurch schnell zerstört werden. Dieser Effekt macht die Nutzung herkömmlich gefertigter Massendurchflußregler für Kohlendioxid unter hohem Druck unbrauchbar. Zur Durchführung des erfindungsgemäßen Verfahrens werden deshalb Massendurchflußregler aus Kohlendioxid resistenten Werkstoffen, wie Kel-F, benutzt.

Besonders vorteilhaft für das erfindungsgemäße Verfahren zeigt sich die Verwendung von Kohlendioxid im überkritischen Zustandsbereich, d.h. bei Treibmitteltemperaturen von über 31 °C. Dazu wird das Treibmittel Kohlendioxid vor Eintritt in den Massendurchflußregler auf eine Temperatur oberhalb 31 °C aufgeheizt. Mit Kohlendioxid als Treibmittel im überkritischen Zustand lassen sich im Vergleich zu Stickstoff geringere Raumdichten der aufgeschäumten Kunststoffe erzielen.

Weiterhin hat es sich als vorteilhaft erwiesen, die Treibmittel mit Drücken zwischen 200 und 600 bar, insbesondere aber zwischen 350 und 500 bar, der Kunststoffmasse zuzuführen. Die Einspeisung der Treibmittel mit solch hohen Drücken erlaubt es, eine genügend große Menge an Treibmittel im Kunststoff zu lösen.

In einer weiteren vorteilhaften Ausgestaltung des Verfahrens wird der Druck des Treibmittels vor Eintritt in den Massendurchflußregler derart geregelt, daß die Differenz zum Druck hinter dem Massendurchflußregler konstant bleibt. Dazu wird der sich vor dem Massendurchflußregler (FIC) befindliche "Pressure-Controller" (PC) von einem Manometer (PI) am Ausgang des Massendurchflußreglers angesteuert. Der Massendurchflußregler mißt dann den über einen konstanten Druckunterschied geförderten Massestrom an Treibmittel. Der mit konstanter Druckdifferenz betriebene Massendurchflußregler arbeitet mit großer zeitlicher Stabilität und ermöglicht damit eine zuverlässige Produktion über große Zeitabstände.

Wie bereits mehrfach erwähnt, eignet sich das erfindungsgemäße Verfahren zur Messung der einer Kunststoffmasse zugeführten inerten Treibmittelmenge, insbesondere aber zur Regelung eines inerten Treibmittelstroms in Extruderanlagen. Die exakte Regelung des Massestroms an Treibmittel erlaubt konstante Produktionsbedingungen bei der Extrusion aufgeschäumter Kunststoffe. Damit wird die lange Zeit erwünschte industrielle Produktion von mit inerten Treibmitteln aufgeschäumten Kunststoffen möglich.

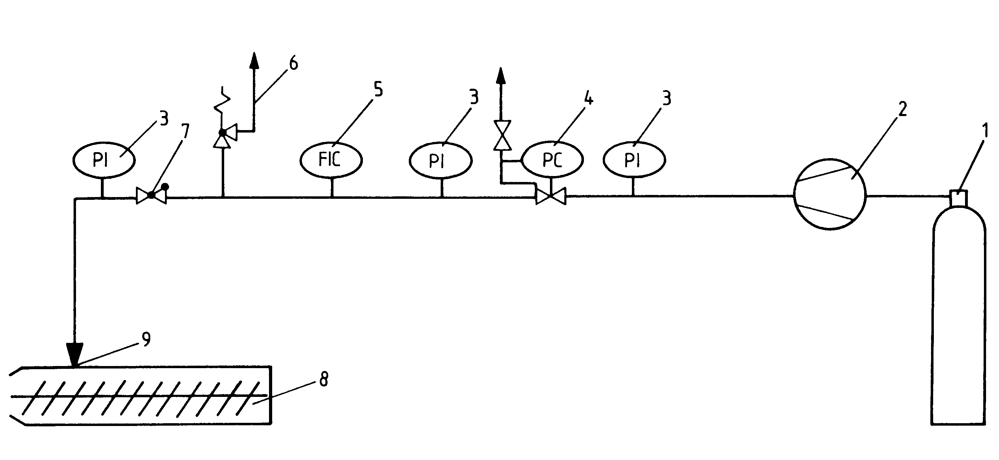

Anhand der in der Zeichnung schematisch dargestellten Anlage zur Durchführung des erfindungsgemäßen Verfahrens soll ein Ausführungsbeispiel gegeben werden.

Die Zeichnung stellt eine Treibmittel-Versorgungsanlage für einen Extruder 8 dar, mit dem aufgeschäumte Kunststoffartikel, wie Folien, Profile, Kabelummantelungen etc., hergestellt werden. Das Treibmittel Kohlendioxid wird einem Druckbehälter 1 entnommen und von einem Kompressor 2 auf einen Druck von etwa 430 bar verdichtet. Der Druckregler 4 hält den Eingangsdruck am Massendurchflußregler 5 auf 400 bar konstant. An der Zuführungsleitung für das Treibmittel angebrachte Manometer 3 dienen zur Messung der herrschenden Drücke. Der Massendurchflußregler 5 mißt und regelt den über eine Druckdifferenz von etwa 30 bar transportierten Massestrom an Treibmittel. Die Temperatur des Treibmittels Kohlendioxid beträgt in diesem Fall 20 °C und ist somit unterkritisch. Pro Stunde wird ein Massestrom von 0,8 $Nm^3$ Kohlendioxid transportiert. Hinter dem Massendurchflußregler 5 ist ein Sicherheitsventil 6 angeordnet, das die Einhaltung eines bestimmten, nicht zu überschreitenden Maximaldrucks, in diesem Fall 350 bar, garantiert. Über ein Rückschlagventil 7 wird der konstante Massestrom an $CO_2$ der im Extruder 8 befindlichen Kunststoffmasse, Polyethylen, zugeleitet. Die Zuleitungsstelle 9 befindet sich etwa in der Mitte des Extruders 8, wo der dort herrschende Druck Maximalwerte einnimmt. Im Extruder befindet sich thermoplastisches, bei Temperaturen über 100 °C erweichtes Polyethylen. Hinter der Zuleitungsstelle 9 wird dieser Kunststoff im Extruder mit dem Kohlendioxid vermischt und zu einer ringförmigen Austrittsdüse transportiert. Dort werden Folien extrudiert, die unter Normalbedingungen aufschäumen und abkühlen. Druck und Menge des zugeführten Treibmittels Kohlendioxid sind so gewählt, daß die Folien mit einem gewünschten Raumgewicht von 350 g/l hergestellt werden. Auch geringere Raumgewichte von etwa 200 g/l lassen sich mit dem erfindungsgemäßen Verfahren bei Verwendung von Kohlendioxid erzielen.

**Patentansprüche**

1. Verfahren zur Herstellung aufgeschäumter Kunststoffe, bei dem dem geschmolzenen, erweichten oder flüssigen Kunststoff regelbar ein Treibmittel mit hohem Druck zugeführt wird, wobei inerte Treibmittel wie Kohlendioxid, Stickstoff oder Argon oder ein Gemisch von diesen verwendet werden, dadurch gekennzeichnet, daß die zugeführte Menge des Treibmittels mit einem Massendurchflußregler (Mass-Flow-Controller) gemessen und geregelt wird.

2. Verfahren nach Anspruch 1, dadurch gekennzeichnet, daß als Treibmittel Kohlendioxid verwendet wird, das sich im überkritischen Zustandsbereich befindet.

3. Verfahren nach den Ansprüchen 1 oder 2, dadurch gekennzeichnet, daß das Treibmittel mit Drücken zwischen 200 und 600 bar, vorzugsweise zwischen 350 und 500 bar, dem Kunststoff zugeführt wird.

4. Verfahren nach einem der Ansprüche 1 bis 3, dadurch gekennzeichnet, daß der Differenzdruck zwischen Eingang und Ausgang des Massendurchflußreglers konstant gehalten wird.

5. Verfahren nach einem der Ansprüche 1 bis 4, dadurch gekennzeichnet, daß der das Treibmittel enthaltende Kunststoff extrudiert wird.

Europäisches Patentamt

# EUROPÄISCHER RECHERCHENBERICHT

Nummer der Anmeldung

EP 91 11 9500

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| P,Y | EP-A-0 430 292 (AIR PRODUCTS AND CHEMICALS)<br>* Seite 6, Zeile 8 - Zeile 11 *<br>* Seite 11, Zeile 24 - Zeile 48 *<br>* Seite 8, Zeile 1 - Zeile 15; Abbildung 1 *<br>--- | 1,3,5 | B29C67/22 |
| Y | EP-A-0 395 126 (BRONCKHORST HIGH TECH)<br>* das ganze Dokument *<br>--- | 1,3,5 | |
| A | US-A-4 344 710 (D E JOHNSON ET AL)<br>* das ganze Dokument *<br>--- | 1-5 | |
| A | EP-A-0 079 012 (MARYLAND CUP)<br>* das ganze Dokument *<br>--- | 1,4,5 | |
| A | US-A-4 836 814 (J D BAMBARA)<br>* Spalte 3, Zeile 45 - Spalte 4, Zeile 31 *<br>* Spalte 4, Zeile 37 - Zeile 62 *<br>--- | 1,2,5 | |
| T | EP-A-0 461 298 (OWENS-ILLINOIS PLASTIC)<br>* Seite 4, Zeile 15 *<br>* Seite 5, Zeile 16 - Zeile 19 *<br>* Seite 5, Zeile 26 - Zeile 49 * | 1-5 | RECHERCHIERTE SACHGEBIETE (Int. Cl.5)<br><br>B29C<br>B29B<br>G01F |

-----

Der vorliegende Recherchenbericht wurde für alle Patentansprüche erstellt

| Recherchenort | Abschlußdatum der Recherche | Prüfer |
|---|---|---|
| DEN HAAG | 26 FEBRUAR 1992 | PHILPOTT G.R. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
.............................................................................
& : Mitglied der gleichen Patentfamilie, übereinstimmendes Dokument

EPO FORM 1503 03.82 (P0403)